# EUROPEAN PATENT APPLICATION

(11) **EP 1 930 811 A1**
(43) Date of publication of application: **11.06.2008**
(21) Application number: 06388066.0
(22) Date of filing: 05.12.2006
(51) Int. Cl.: G06F 12/08

(54) **Methods and devices for cache enhancing**

(71) Applicant: Telefonaktiebolaget LM Ericsson (publ), 164 83 Stockholm (SE)
(72) Inventor: Ljungberg, Per, 223 61 LUND (SE)
(74) Representative: Hendriksen, David

(57) **Abstract**

This invention relates to enhanced cache performance when using pre-fetch. If pre-fetch is enabled, a single merged request to memory is done comprising the data for both the cache line fill and the pre-fetch. When the cache has consumed the data corresponding to the cache line fill, it will request the data corresponding to the pre-fetch. However, this data has already been retrieved from the memory.

In this way, a simple, reliable and efficient way of enhancing a cache operation is obtained since the second pre-fetch request (forth denoted second cache line fill) will only take the pure access time to the external memory as it is done as part of the same request as the first pre-fetch request (forth denoted first cache line fill). The internal delays and the setup time to the external memory for the second time are saved.

Furthermore, high-speed memory close to the processor is not needed or can be reduced in size as it can be replaced partly or completely with external (to the processor) memory that can be slower and thereby cheaper without significant disadvantages of performance. Furthermore, the issues of using a pre-fetch function together with memory, and especially off-chip memory with a larger setup time, are effectively alleviated.

Furthermore, on the average the cost for a cache line fill is reduced whereby the performance is enhanced, especially for control type of code where the instruction cache overhead can be significant. Additionally, on the average the external memory is occupied less cycles giving a reduction in occupied time, which is very important since the bandwidth to the off-chip memory is a scarce resource.

## Description

### TECHNICAL FIELD

The present invention relates to cache-based memory and processor systems. More specifically, the described subject matter relates to devices for and methods of enhanced cache performance comprising pre-fetch.

### BACKGROUND

Modern processors often need memory systems with memories in several layers where the memories closest to the processor typically are small and fast, often referred to as caches. The memories in the layers further from the processor are typically larger and slower. A reason for this layering of different memories is that fast memories are extremely costly compared to slower memories and thus it would be very costly and difficult to have a whole program fit in a tightly connected and fast memory. By tightly connected is meant a connection with a sufficiently large bandwidth so the connection do not act as a bottle-neck. It is well known that if the cache sizes are sufficiently large the performance degradation for the processor system is quite small even though only a smaller portion of the memories are fast.

A processor system can have caches for instructions and/or data. Instruction caches typically exist only for read (or fill) operations while data caches may exist for both read and write operations.

A typical instruction cache operation may e.g. be described as:
The processor executes a program by issuing a program address and tries to fetch the corresponding instruction from the cache memory. If an instruction corresponding to the issued address resides in the cache, the processor fetches the instruction. The processor then continues with execution by generating another address. If the instruction does not reside in the cache a so-called cache miss happens and the cache circuit then generates a number of memory reads to upper layer memories in order to fill the cache with correct content where the latter typically is referred to as a cache line fill. Once the correct content is in the cache, execution resumes.

Obviously, it is important to try to minimize the number of cache misses since this is the kind of event that degrades the performance. The cost of a cache miss is the number of clock cycles it takes to fill up the cache line where this time mostly depends on the size of the cache line and the type of memory it is fetched from. The cost of a cache miss may also be a use of bandwidth for a bus or the like connecting the processor or the cache memory to the memory where the information is retrieved from, especially if the bus or the like is also used by other functions or circuits.

One type of processor is a so-called Digital Signal Processor (DSP) that is a special type of processor that traditionally has been equipped with fast and tightly coupled memories due to performance requirements of the DSP application. However, recently DSPs have started to undergo the same transition towards cache based memory systems, mainly due to the increased complexity, i.e. code size, of the applications being run on a DSP.

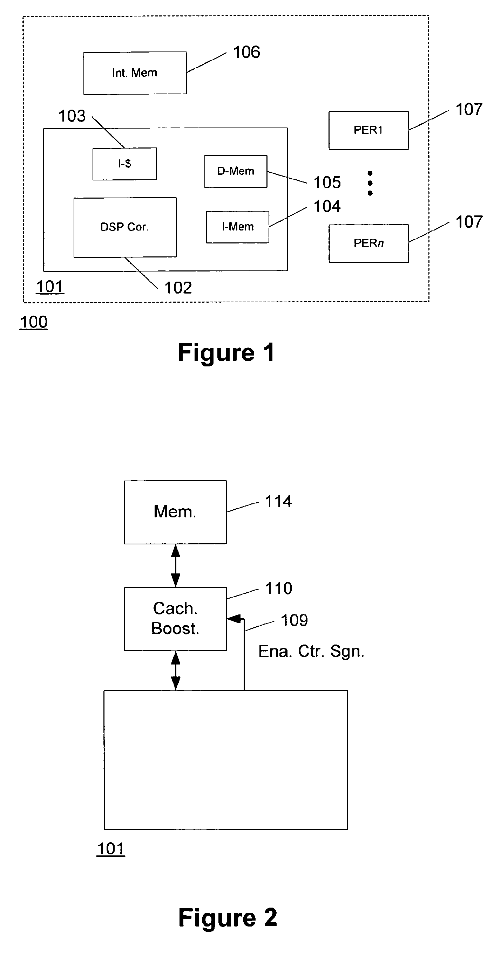

As a specific example of a DSP system is illustrated in Figure 1. This exemplary DSP has the following memory setup: 32 kBytes instruction cache, 32 kBytes tightly coupled program memory, and 64 kBytes tightly coupled data memory.

Schematically illustrated in Figure 1 is a DSP subsystem (100) comprising a DSP (101), comprising a DSP core (102), an instruction cache (103), a tightly coupled instruction memory (104) and a tightly coupled data memory (105) both being internal memories of the DSP (101). The DSP subsystem (100) is typically located on an ASIC (Application Specific Integrated Circuit). As the internal memories (104, 105) are not sufficiently large for certain modern applications the DSP subsystem (100) typically further comprises an additional internal (to the DSP subsystem (100) but external to the DSP (101)) memory (106), which typically is user configurable with respect to size and which may comprise SRAM memory and ROM memory of several hundreds of kilobytes, that also may be located on the ASIC comprising the DSP subsystem (100). The main content of the additional internal memory (106) will typically be the relevant program code. Execution is done from the instruction cache (103) and cache fills are typically done from the additional internal memory (106), e.g. either from the SRAM or ROM memory. The DSP subsystem (100) will also typically comprise one or more peripherals (107) controlled by the DSP core (102). As examples of such peripherals (107) are e.g. timers, interrupt controllers, etc.

Other specific DSP subsystem (100) may vary in certain details and layout but will function in a similar fashion.

Problems with such DSP solutions are that they are quite expensive and take up a relatively large size on the ASIC compared to the other circuits, applying specific functions e.g. for digital baseband ASIC solutions, that the DSP (101) and DSP sub-system (100) are to be used in connection with. Furthermore, the internal memories (104, 105) are typically the same size as the DSP core (101) itself for a proper or useful performance, which is very expensive due to the cost of such internal and tightly coupled memories (104, 105).

The prior art DSP solutions and its related problems will be discussed in further detail in connection with Figure 1 in the following.

Furthermore, patent specification US 6,981,127 discloses a processor consuming a variable amount of bytes in each clock cycle into the processor's fetching unit. In order to speed up accesses towards external memory a pre-fetch unit is used consuming a fixed amount of data. However, the pre-fetch buffer requires address decoding logic increasing the complexity of the design.

Patent application US 2001/018735 discloses an alternative to traditional instruction cache structure where a whole code line is pre-fetched from external memory and stored in buffers. If the code is linear, i.e. it does not contain loops, the next coming instructions will already be fetched. If the code is not linear, i.e. contains loops, this can be handled efficiently as long as the loop is small enough to be contained in the buffers. However, if the software comprising the instructions to be executed is linear the benefit of an instruction cache pre-fetch is small.

Patent specification US 6,792,496 discloses pre-fetching of data in a system with variable latency in time for a response from a memory or peripheral.

Patent specification US 6,195,735 discloses a pre-fetch system that utilizes system information to adjust the size of the pre-fetch in order to optimize system performance.

Patent specification US 5,787,475 discloses a method and apparatus for determining when an Input/Output (I/O) module should pre-fetch cache lines of data from a main memory.

### SUMMARY

It is an object of the invention to provide a method (and corresponding device) of enhanced cache performance, especially when using off-chip memory.

It is a further object to provide a way of moving DSP or processor code from internal (to the DSP or processor) memories to (e.g. off-chip) memory external to the DSP or processor, which enables a large cost improvement as the size of the internal and much more expensive memories can be reduced. An additional object is to enable this without causing significant, if any, performance degradation. A further object is to enable this by a simple design.

An additional object is to avoid or mitigate the impact on the bandwidth to external (to the DSP or processor) (e.g. off-chip) memory by the DSP or processor now using some of the bandwidth to access the external memory for the DSP or processor code.

Yet a further object in one embodiment is to reduce the impact of using external (e.g. off-chip) memories with a setup time being large compared to the time required for the actual data access.

This is achieved by a method (and corresponding device) of enhanced cache performance comprising pre-fetch, the method comprising receiving a first pre-fetch request in a cache boosting circuit from a processor where the first pre-fetch request requests cache data from a memory being external to the processor, merging or combining the first pre-fetch request with an additional pre-fetch request requesting additional cache data resulting in a single merged request for cache data and forwarding the single merged request to the memory, where the additional cache data is consecutive to the data of the first pre-fetch request, receiving at least a first part of the requested cache data of the single merged request in the cache boosting circuit from the memory and supplying the first part of the requested cache data to the processor for processing, where the first part of the requested cache data corresponds to the data requested by the first pre-fetch request, receiving a second pre-fetch request in the cache boosting circuit after the processor has received the first part of the requested cache data where the cache boosting circuit do not forward the second pre-fetch request to the memory and where the second pre-fetch request requests cache data from the memory, and supplying the processor with a second part of the requested cache data of the single merged request to the processor after it is received in the cache boosting circuit and after the processor is done processing the first part of the requested cache data of the single request where the second part of the requested cache data corresponds to the data requested by the second pre-fetch request.

In this way, a simple, reliable and efficient way of enhancing a cache operation is obtained since the second (and any additional if applicable) pre-fetch request(s) (forth denoted second cache line fill) will only take the pure access time to the external memory as it is done as part of the same request as the first pre-fetch request (forth denoted first cache line fill). The internal delays and the setup time to the external memory for the second time are saved. In effect the additional pre-fetch request requesting additional cache comprises the second (and any additional if applicable) pre-fetch request(s) from the processor.

Furthermore, high-speed memory close to the processor is not needed or can be reduced in size as it can be replaced partly or completely with external (to the processor) memory that can be slower and thereby cheaper without significant disadvantages of performance. Furthermore, the issues of using a pre-fetch function together with memory, and especially off-chip memory with a larger setup time, are effectively alleviated.

Furthermore, on the average the cost for a cache line fill is reduced whereby the performance is enhanced, especially for control type of code where the instruction cache overhead can be significant. Additionally, on the average the external memory is occupied less cycles giving a reduction in occupied time, which is very important since the bandwidth to the off-chip memory is a scarce resource.

In one embodiment, the single merged request comprises an integer number of pre-fetch requests, each pre-fetch request corresponding to a pre-fetch request from the processor, where the integer number is selected from the group of 2, 4, 8, 16, ... and wherein the cache boosting circuit supplies received cache data of the pre-fetch requests in turn to the processor in response to a pre-fetch request from the processor and does not forward any of the pre-fetch requests to the memory.

In this way various implementations may fetch or request data for 2 or 4 or 8, etc: pre-fetch requests at a time paying the memory setup time only once. The specific integer number may be selected depending on what is best for a given implementation or setup. Alternatively, the integer number may be any natural number larger than 1.

In one embodiment, the processor starts processing the first part of the requested cache data of the single merged request after requesting the second pre-fetch request.

In one embodiment, the memory is an off-chip memory and the processor is on-chip. In another embodiment, the memory is an on-chip memory and the processor is on-chip but where the memory is external to the processor.

In one embodiment, the memory has a data retrieval time or setup time for requested data that is large relative to the time it takes to retrieve the requested data.

In one embodiment, the processor is a digital signal processor. In one embodiment the memory is a 16-bit DDR or a 16-bit SDR memory.

In one embodiment, the cache boosting circuit receives an enable control signal controlling whether the cache boosting circuit should be active or not.

Other advantageous embodiments of the methods and devices are defined in the sub-claims and explained in the following.

Furthermore, the invention also relate to a cache boosting device for enhancing cache performance comprising pre-fetch, the cache boosting device comprising a control logic circuit being adapted to receive a first pre-fetch request from a processor where the first pre-fetch request requests cache data from a memory being external to the processor, merge or combine the first pre-fetch request with an additional pre-fetch request requesting additional cache data resulting in a single merged request for cache data and forwarding the single merged request to the memory, where the additional cache data is consecutive to the data of the first pre-fetch request, receive at least a first part of the requested cache data of the single merged request in the cache boosting circuit from the memory and supplying the first part of the requested cache data to the processor for processing, where the first part of the requested cache data corresponds to the data requested by the first pre-fetch request, receive a second pre-fetch request in the cache boosting circuit after the processor has received the first part of the requested cache data where the cache boosting circuit do not forward the second pre-fetch request to the memory and where the second pre-fetch request requests cache data from the memory, and supply the processor with a second part of the requested cache data of the single merged request to the processor after it is received in the cache boosting circuit and after the processor is done processing the first part of the requested cache data of the single request where the second part of the requested cache data corresponds to the data requested by the second pre-fetch request.

The embodiments of the device according to the present invention correspond to the embodiments of the method according to the present invention and have the same advantages for the same reasons.

Further, the invention also relates to a computer readable medium having stored thereon instructions for causing one or more processing units to execute the method according to the present invention.

### BRIEF DESCRIPTION OF THE DRAWINGS

Figure 1 schematically illustrates a prior art DSP subsystem;
Figure 2 schematically illustrates an embodiment of the present invention;
Figure 3 schematically illustrates interfaces between a DSP and (off-chip) memory according to an embodiment;
Figure 4 schematically illustrates memory timings for different configurations; and
Figure 5 schematically illustrates a block diagram of an embodiment of a cache boosting circuit.

### DETAILED DESCRIPTION

Figure 1 schematically illustrates a prior art DSP subsystem. Shown are, as described earlier, a DSP subsystem (100) comprising a DSP (101) where the DSP (101) comprises a DSP core (102), an instruction cache (103), a tightly coupled instruction memory (104) and a tightly coupled data memory (105). Furthermore, the DSP subsystem (100) comprises an additional internal (to the DSP subsystem (100) but external to the DSP (101)) memory (106) and one or more peripherals (107) controlled by the DSP core (102).

If you want to move a majority of the DSP software to off-chip memory (not shown), i.e. outside the DSP subsystem (100), e.g. in order to save costs, a problem is that every cache line fill becomes much more costly in terms of clock cycles and the performance is degraded correspondingly. Furthermore, by doing this, the DSP will have to compete for the important and usually scarce bandwidth to the off-chip memory.

As a typical example, a cache line fill will cost 10 DSP cycles in certain systems, from the internal memory (106), e.g. SRAM and/or ROM, while line fill from off-chip memory in the same system would require 70 DSP cycles (for 104 MHz memory, single data rate and 16-bit off-chip memory). This leads to that the instruction cache (103) related performance degradation is 7 times larger for off-chip memory compared to on-chip memory (106). A typical DSP may e.g. have a cache line size of 256 bits = 32 bytes. It is well known that given a cache fill request starting at a given address it is very probable that the next cache line fill will be for the consecutive addresses. This is due to the sequential execution nature of (real life) programs.

Typically, the instruction cache (103) will have a feature often referred to as pre-fetch or similar that enhances performance for some memory systems. If pre-fetch is enabled, once a cache line fill is completed, then the instruction cache (103) initiates a cache line fill request for the consecutive cache line. Simultaneously, the DSP core (102) starts executing. With a high probability the next cache line fill will be the consecutive 32 bytes. If pre-fetch is enabled the request is already started and the instruction data is on its way into the instruction cache (103), which will shorten the wait time. In this way, a higher performance is achieved.

However, for some memory systems there are a number of problems with such a pre-fetch function. More specifically, off-chip memories very typically have a large setup time compared to the time needed for actually accessing the stored data. The second cache line fill (that is automatically initiated by the pre-fetch function) does another setup of the memory that is comparatively very costly, e.g. 70 DSP cycles for some systems.

If the second cache line is not required after all, the important and usually scarce bandwidth has been wasted and other accesses to the off-chip memory have been halted unnecessarily.

If the second cache line is not required then it is very likely another cache line is required instead. There is then a large probability that this access is locked out by the ongoing pre-fetch.

If the second cache line is required then it is very likely required fast after the first one. The gain is then just the few cycles of execution before the next line is requested since the setup time is large thereby delaying the access and retrieval of information. When comparing these few cycles of execution with the large number of cycles, e.g. 70 cycles in some systems, for a cache fill due to off-chip memory setup it is evident that the pre-fetch function is far from optimal for off-chip memories as the gain, when successful, is limited (only a few cycles since the setup time is large causing a wait although the correct second cache line is being retrieved) while the cost, when not successful, is very high (waste of bandwidth possible blocking other accesses and locking the needed cache line by the ongoing pre-fetch).

Figure 2 schematically illustrates an embodiment of the present invention. Shown is DSP (101) or another type of processor connected to a cache boosting circuit (110) according to the present invention that is connected to a memory (114) that may be external to both the DSP (101) and the DSP subsystem (not shown).

The DSP (101) may be any processor using a pre-fetch function or the like as explained in connection with Figure 1, i.e. a pre-fetch function that performs a first cache line fill and when the first cache line fill is completed then initiates a second cache line fill while the processor core at the same time starts executing the instructions of the first cache line fill whereby the instruction data of the second cache line fill already is on its way into the cache thereby shortening the wait time when the processor core is done executing the instruction of the first cache line fill.

Furthermore, the memory (114) need not be off-chip and relatively slower although the advantages of the present invention are largest for memories with large setup times relative to data access time. However, there is a benefit with all memory types.

According to the present invention, when a pre-fetch or similar function is enabled and an embodiment of the present invention is to be used, e.g. as signalled to the cache boosting circuit (110) by an enable control signal (109), two consecutive cache line fills or memory requests are merged or combined in such a way that the access to the (off-chip) memory (114) is done in a single burst or action. In this way, the setup penalty for accessing the (off-chip) memory (114) is paid only once.

Preferably, the cache boosting circuit (110) can be turned on and off using the enable control signal (109) being derived from or supplied by the DSP or processor (101). If pre-fetch is disabled the cache boosting circuit (110) should be turned off. Alternatively, the enable control signal (109) may be derived or supplied from elsewhere.

More specifically, the cache boosting circuit (110) merges the requests for cache use by, once the first cache line fill is requested, generating a request for twice the amount of data to be retrieved, i.e. for a first and a second cache line fill. As soon as the cache boosting circuit (110) receives half of the total amount of data it supplies the half to the DSP or processor (101). After half of the requested amount of data is received by the DSP or processor (101) it generates a request for the second cache line fill and starts executing the received data as normal. The second cache line fill request is then 'captured' by the cache boosting circuit (110) but not passed on as normally. The corresponding data of the second cache line fill is already present in the cache boosting circuit (110) or at least on its way as twice the amount of data was requested at the time of the first cache line fill. Consequently, the DSP or processor (101) gets a very fast reply for the second cache line request as it already is ready or on its way without having to spend additional setup time for the memory (114) or use bandwidth for the second request. As mentioned later in connection with tables 1 and 2, this could in one example e.g. save 38 cycles out of 140 cycles for SDR memory or out of 108 cycles for DDR memory.

As alternatives instead of the cache boosting circuit (110) generating a request for twice the amount of data to be retrieved (i.e. requesting two cache line fills) it may request another amount of data to be retrieved for an integer number of cache line fills, e.g. 3, 4, etc. times the amount of data to be retrieved corresponding to 3, 4, etc. cache line fills. Then the cache boosting circuit (110) receives an appropriate part or fraction of the total requested data instead of a half. The integer number may be selected from the set of integers 2*^{N}*; *N* ∈ 1, 2, 3, ....

Furthermore, the cache boosting operation can be done transparently for the DSP or processor (101) as it still functions as specified requesting two cache line fills and do not require modification of the DSP or CPU core. The cache boosting circuit (110) automatically doubles the requested amount of data to be retrieved when receiving a request for a first cache line fill.

In this way, external memory to the DSP but internal memory to the DSP subsystem (not shown) like (106) in Figure 1 is not needed or can be reduced in size as it may be replaced partly or completely with the external (to the DSP and DSP subsystem) memory that can be slower and thereby cheaper without significant disadvantages of performance. Furthermore, the issues of using a pre-fetch function together with memory, and especially off-chip memory with a larger setup time, are effectively alleviated.

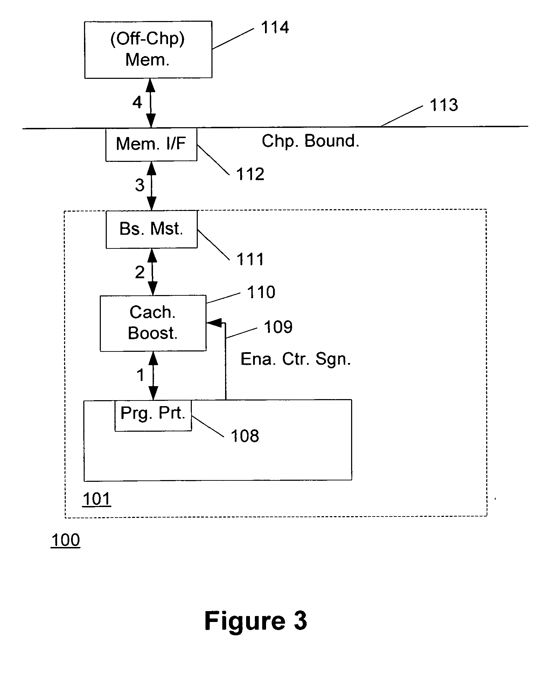

A more specific exemplary embodiment is illustrated and explained in greater detail in connection with Figure 3.

Figure 3 schematically illustrates interfaces between a DSP and (off-chip) memory according to an embodiment. Shown is a DSP subsystem (100) or another type of processing subsystem comprising a DSP or another type of processor e.g. corresponding to the DSP subsystem and DSP shown and explained in connection with Figure 1.

Shown are also a program port (108) of the DSP (101) connected via an interface 1 to a cache boosting circuit (110), such as the one explained in connection with Figure 2, connected via an interface 2 to a bus protocol master (111), e.g. an AHB (AMBA High-performance Bus) bus protocol master from ARM, connected via an interface 3 with an (e.g. external) memory interface (112) connected via an interface 4 with an (e.g. off-chip) memory (114).

Preferably, the cache boosting circuit's (110) function can be turned on and off using an enable control signal (109) derived from or supplied by the DSP or processor (101).

Interface 1 is an interface between a program port (108) of the DSP (101) and the cache boosting circuit (110). In one embodiment, interface 1 is a 64-bit bus interface, e.g. a 64-bit AHB interface from ARM.

Interface 2 is an interface between the cache boosting circuit (110) and the bus protocol master (111) of the DSP subsystem. In one embodiment, interface 2 is also a 64-bit bus interface, e.g. a 64-bit AHB interface from ARM.

Interface 3 is an interface between the bus protocol master (111) of the DSP subsystem and the (external) memory interface (112). In one embodiment, interface is a 32-bit bus interface, e.g. a 32 AHB interface from ARM.

Interface 4 is an interface between the (external) memory interface (112) and the (off-chip) memory (114). In one embodiment, this interface typically is a 16-bit interface.

The bus widths require a certain clock speed in order for an interface to not become a bottleneck of the system that depends on the specific task(s) and design of the DSP or processor subsystem. In one embodiment, they should be designed to handle 104 MHz Double Data Rate (DDR) memories. On a 16-bit interface (Interface 4) such a memory allows a 416 MByte/s transfer rate. In order to handle this data efficiently, Interface 3 should run at 104 MHz. In the same way, Interfaces 1 and 2 should run at least 52 MHz to keep up.

A sequence of events in a cache line fill if the cache boosting circuit (110) is not enabled and pre-fetch is enabled may be as follows. As an example the DSP or processor (101) has a cache line size of 256 bits = 32 bytes. The program port (108) and the bus width of the DSP or processor subsystem (100) are as an example 64 bits. In this example, the cache line fill is generated as 4 64-bit read requests on both DSP or processor program port (108) and the DSP or processor subsystem boundary, i.e. at Interfaces 1 and 2 and the cache boosting circuit (110) simply forwards the requests unaltered. The request is first converted to 8 32-bit read requests on Interface 3, and finally to 16 16-bit read requests on Interface 4. The data propagates from the (e.g. off-chip) memory through the different interfaces into the instruction cache (not shown; see 103 in Figure 1), and the processor resumes execution. A second cache line fill request for the next 32 consecutive bytes, i.e. an amount equal to the cache line size, is then issued and the process is repeated again.

If the cache boosting circuit (110) is enabled the DSP or processor (101) issues 4 64-bit read requests as usual. The cache boosting circuit (110) accept the request but issues 8 64-bit read requests instead and these 8 64-bit read requests are presented at the DSP or processor subsystem boundary, i.e. at Interface 2. The request is converted into 16 32-bit read requests on Interface 3 and finally to 32 16-bit read requests on Interface 4.

The requested data propagates from the (e.g. off-chip) memory through the different interfaces into the instruction cache of the DSP or processor (not shown; see e.g. 103 in Figure 1). When half of the requested data has reached the cache memory in the DSP or processor, the cache line fill request from the DSP or processor has been completed. Consequently, the DSP or processor resumes execution and issues a second cache line fill request for the next 32 consecutive bytes.

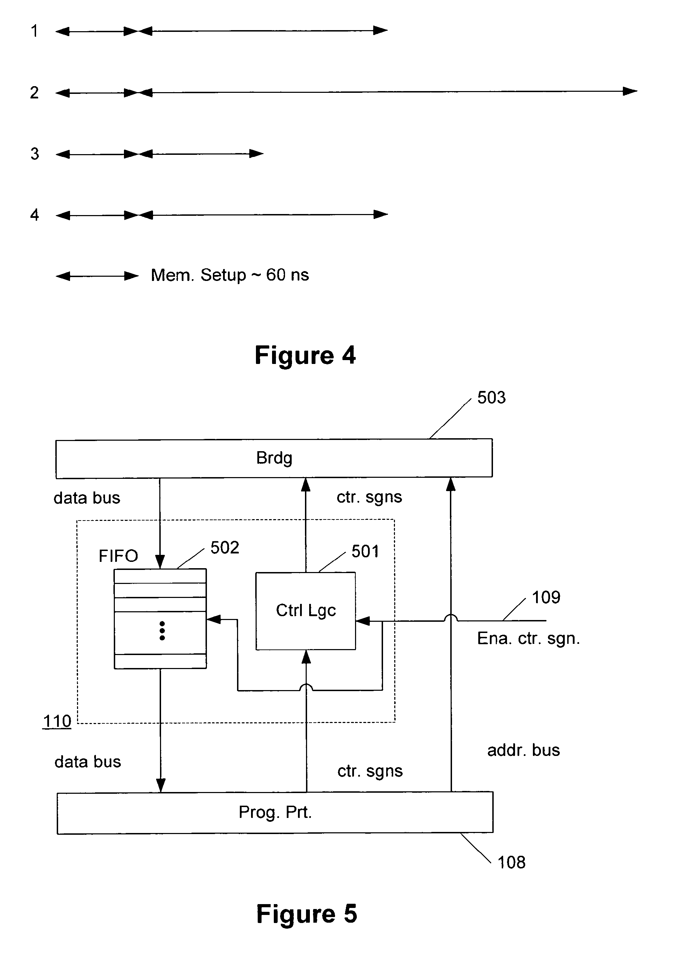

The second cache line fill request is accepted by the cache boosting circuit (110) but the cache boosting circuit (110) does not forward the read request since the corresponding data already is being collected from the (e.g. off-chip) memory (114). The cache boosting circuit (110) merely gathers and delays the streaming data e.g. in a small number of FIFO-registers (e.g. as in the exemplary embodiment of Figure 5) or the like. In this way, the DSP or processor (101) gets an immediate or as soon as possible reply for its second cache line fill request thereby enhancing the cache operation.

It is to be understood that the specific bus rates and lengths of read requests are only exemplary. Other values may e.g. be 64-bit and 128-bit reads or 8-bit and 16-bit reads and correspondingly for the bus rates. As another example the 16-bit size of Interface 4 is dependent on the bit size of the used memory and could e.g. be 32 bit, 64 bit, etc.

Alternatively and as mentioned earlier, the cache boosting circuit (110) may request more than two times the amount of data requested by the DSP or processor (101) and the cache boosting circuit (110) would receive an appropriate part or fraction of the total requested data instead of a half.

Calculations of the benefit for specific exemplary configuration are given in connection with Figure 4.

Figure 4 schematically illustrates memory timings for different configurations. Shown are memory timings for combinations of Single and Double Data Rate, 16 and 32 16-bit reads, namely 1) Single Data Rate with 16 16-bit words, 2) Single Data Rate with 32 16-bit words, 3) Double Data Rate with 16 16-bit words, 4) Double Data Rate with 32 16-bit words and an indication of the time needed for memory setup, which approximately, in this specific example, is 60 ns.

This specific example is done using off-chip memories where such a memory typically operates at 104 MHz and has a setup time of approximately 60 ns. The specific example assumes a single data rate memory with a 16-bit wide interface. For one cache line fill a single setup time and 16 104 MHz cycles are spent. Thereby, approximately 12 208 MHz cycles for the setup and 32 208 MHz cycles for actually reading the data from the memory are used.

This causes the off-chip memory to be occupied 44 208 MHz cycles when reading one cache line. There are lots of additional delays in bridges and interfaces and the total time for a cache line fill is approximately 70 cycles for such a system. This gives an approximately 26 cycle overhead for a cache line fill that are not memory related.
1) SDR, 16 16-bit reads takes 12 + 32 = 44 208 MHz cycles access time to the memory, which corresponds to a cache line fill without the help of the described cache boosting circuit.
2) SDR, 32 16-bit reads takes 12 + 64 = 76 208 MHz cycles access time to the memory, which corresponds to a memory request for two cache line fills using the described cache boosting circuit.
3) DDR, 16 16-bit reads takes 12 + 16 = 28 208 MHz cycles access time to the memory, which corresponds to a cache line fill without the cache boosting circuit.
4) DDR, 32 16-bit read takes 12 +32 = 44 208 MHz cycles access time to the memory, which corresponds to a memory request for two cache line fills using the described cache boosting circuit.

If we assume that the non-memory related overhead is 26 cycles in all cases then the cost of the cache fills is summarized below in Table 1 illustrating the costs for the first and second cache fill if the cache boosting circuit is not enabled and Table 2 illustrating the costs for the first and second cache line fill if the cache boosting circuit is enabled.

**Table 1**

| | First fill | Second fill | Sum |
|---|---|---|---|
| SDR | 44 + 26 = 70 | 44 + 26 = 70 | 70 + 70 = 140 |
| DDR | 28 + 26 = 54 | 28 + 26 = 54 | 54 + 54 = 108 |

**Table 2**

| | First fill | Second fill | Sum |
|---|---|---|---|
| SDR | 44 + 26 = 70 | 32 | 70 + 32 = 102 |
| DDR | 28 + 26 = 54 | 16 | 54 + 16 = 70 |

If the cache boosting circuit is enabled and we make a longer access to off-chip memory than otherwise then the first cache line fill will never be more expensive. The benefit of the cache boosting circuit is that the second cache line fill will only take the pure access time to the off-chip memory as it is done as part of the same request as the first cache line fill. The internal delays and the setup time to the off-chip memory for the second time are saved.

Benefits of the cache boosting circuit can thus be summarized for this particular example assuming 104 MHz DDR memory as off-chip memory:
- On the average the cost for a cache line fill is reduced from 54 cycles to 70/2 = 35 cycles, which is a reduction by 35%. The performance is enhanced accordingly, especially for control type of code where the instruction cache overhead can be significant.
- On the average the off-chip memory is occupied 44 cycles instead of 2x28 = 56 cycles giving a reduction by 21%, which is very important since the bandwidth to the off-chip memory is a scarce resource.
- The cache boosting circuit is a very simple design and it does not have any negative effect if pre-fetch is enabled since the signals may pass directly through the cache boosting circuit with no loss of cycles.

Figure 5 schematically illustrates a block diagram of an embodiment of a cache boosting circuit. Shown are a cache boosting circuit (110) connected to a program port (108) of a processor, DSP or the like and to a bus bridge (503). The cache boosting circuit (110) comprises in this example a control logic circuit (501) and a data storage element (502) like a FIFO queue element or another type of storage. The control logic circuit (501) and the data storage element (502) receives an enable control signal (109) for controlling whether the cache boosting circuit (110) is enabled or not as explained earlier.

The control logic circuit (501) is connected to receive one or more control signals from the program port (108) and to transmit one or more control signals to the bridge (503). The data storage element (502) is connected to receive data on a data bus from the bus bridge (503) and to supply data on a data bus to the program port (108).

In this exemplary embodiment, the control logic circuit (501) will (when enabled) after receiving a request for data in the form of a single cache line fill from a processor or DSP by control signal(s) from the program port (108) generate a merged or combined request for a number of consecutive cache line fills or memory requests. The merged or combined request will be transmitted via control signal(s) to the bus bridge (503) which will cause the requested data to be fetched from the appropriate memory as explained before. The requested data will be supplied to the data storage element (502) via the data bus connection between the bus bridge (503) and the data storage element (502) and held there.

When a first part of the data being the data that was initially requested by the processor or DSP has been received by the data storage element (502) this data is provided via a data bus to the program port (108) and to the processor or DSP as explained earlier. The additional part or parts of data being requested (arising from the merged or combined request) is gathered and kept in the data storage element (502). When the processor or DSP requests another request for data in the form of a cache line fill to the control logic circuit (501) this request is halted and is not passed on to the bridge (503) since this data already was requested as part of the combined or merged request. Instead the data is passed on to the program port (108) from the data storage element (502) if it already is present there or when it is received by the data storage (502).

In the claims, any reference signs placed between parentheses shall- not be constructed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A method of enhanced cache performance comprising pre-fetch, the method comprising
- receiving a first pre-fetch request in a cache boosting circuit (110) from a processor (101) where the first pre-fetch request requests cache data from a memory (106; 114) being external to the processor (101),
- merging or combining the first pre-fetch request with an additional pre-fetch request requesting additional cache data resulting in a single merged request for cache data and forwarding the single merged request to the memory (106; 114), where the additional cache data is consecutive to the data of the first pre-fetch request,
- receiving at least a first part of the requested cache data of the single merged request in the cache boosting circuit (110) from the memory (106; 114) and supplying the first part of the requested cache data to the processor (101) for processing, where the first part of the requested cache data corresponds to the data requested by the first pre-fetch request,
- receiving a second pre-fetch request in the cache boosting circuit (110) after the processor (101) has received the first part of the requested cache data where the cache boosting circuit (110) do not forward the second pre-fetch request to the memory (106; 114) and where the second pre-fetch request requests cache data from the memory (106; 114), and
- supplying the processor (101) with a second part of the requested cache data of the single merged request to the processor (101) after it is received in the cache boosting circuit (110) and after the processor is done processing the first part of the requested cache data of the single request where the second part of the requested cache data corresponds to the data requested by the second pre-fetch request.

2. The method of claim 1, wherein the single merged request comprises an integer number of pre-fetch requests, each pre-fetch request corresponding to a pre-fetch request from the processor (101), where the integer number is selected from the group of 2, 4, 8, 16, ... and wherein the cache boosting circuit (110) supplies received cache data of the pre-fetch requests in turn to the processor (101) in response to a pre-fetch request from the processor and does not forward any of the pre-fetch requests to the memory (106; 114).

3. The method of claims 1 or 2 wherein, the processor (101) starts processing the first part of the requested cache data of the single merged request after requesting the second pre-fetch request.

4. The method of claims 1 - 3, wherein the memory (106; 114) is an off-chip memory (114) and the processor (101) is on-chip or wherein the memory (106; 114) is an on-chip memory (106) and the processor (101) is on-chip but where the memory (106) is external to the processor (101).

5. The method of claims 1 - 4, wherein the memory (114) has a data retrieval time or setup time for requested data that is large relative to the time it takes to retrieve the requested data.

6. The method of claims 1 - 5, wherein the processor (101) is a digital signal processor and/or wherein the memory (114; 106) is a 16-bit DDR or a 16-bit SDR memory.

7. The method of claim 1 - 6, wherein the cache boosting circuit (110) receives an enable control signal (109) controlling whether the cache boosting circuit (110) should be active or not.

8. A cache boosting device (110) for enhancing cache performance comprising pre-fetch, the cache boosting device (110) comprising a control logic circuit (501) being adapted to
- receive a first pre-fetch request from a processor (101) where the first pre-fetch request requests cache data from a memory (106; 114) being external to the processor (101),
- merge or combine the first pre-fetch request with an additional pre-fetch request requesting additional cache data resulting in a single merged request for cache data and forwarding the single merged request to the memory (106; 114), where the additional cache data is consecutive to the data of the first pre-fetch request,
- receive at least a first part of the requested cache data of the single merged request in the cache boosting circuit (110) from the memory (106; 114) and supplying the first part of the requested cache data to the processor (101) for processing, where the first part of the requested cache data corresponds to the data requested by the first pre-fetch request,
- receive a second pre-fetch request in the cache boosting circuit (110) after the processor (101) has received the first part of the requested cache data where the cache boosting circuit (110) do not forward the second pre-fetch request to the memory (106; 114) and where the second pre-fetch request requests cache data from the memory (106; 114), and
- supply the processor (101) with a second part of the requested cache data of the single merged request to the processor (101) after it is received in the cache boosting circuit (110) and after the processor is done processing the first part of the requested cache data of the single request where the second part of the requested cache data corresponds to the data requested by the second pre-fetch request.

9. The cache boosting device of claim 8, wherein the single merged request comprises an integer number of pre-fetch requests, each pre-fetch request corresponding to a pre-fetch request from the processor (101), where the integer number is selected from the group of 2, 4, 8, 16, ... and wherein the cache boosting circuit (110) supplies received cache data of the pre-fetch requests in turn to the processor (101) in response to a pre-fetch request from the processor and does not forward any of the pre-fetch requests to the memory (106; 114).

10. The cache boosting device of claims 8 or 9 wherein, the processor (101) starts processing the first part of the requested cache data of the single merged request after requesting the second pre-fetch request.

11. The cache boosting device of claims 8-10, wherein the memory (106; 114) is an off-chip memory (114) and the processor (101) is on-chip or wherein the memory (106; 114) is an on-chip memory (106) and the processor (101) is on-chip but where the memory (106) is external to the processor (101).

12. The cache boosting device of claims 8 - 11, wherein the memory (114) has a data retrieval time or setup time for requested data that is large relative to the time it takes to retrieve the requested data.

13. The cache boosting device of claims 8-12, wherein the processor (101) is a digital signal processor and/or wherein the memory (114; 106) is a 16-bit DDR or a 16-bit SDR memory

14. The cache boosting device of claim 8 - 13, wherein the control logic circuit (501) is adapted to receive an enable control signal (109) controlling whether the cache boosting circuit (110) should be active or not.

15. A computer readable medium having stored thereon instructions for causing one or more processors to execute the method according to any one of claims 1 - 7.
